# FASCICULE DE BREVET EUROPEEN

(11) **EP 2 448 802 B1**
(45) Date de publication et mention de la délivrance du brevet: **07.05.2014**
(21) Numéro de dépôt: 10729826.7
(22) Date de dépôt: 17.06.2010
(51) Int. Cl.: B60W 40/06, B60Q 1/08, B60Q 1/12, B60W 40/072, B60W 40/076

(54) **PROCÉDÉ POUR DÉTERMINER DE MANIÈRE PRÉDICTIVE DES SITUATIONS ROUTIÈRES D'UN VÉHICULE**
VERFAHREN ZUR BESTIMMUNG DER FAHRBEDINGUNGEN EINES FAHRZEUGES IM VORAUS
METHOD FOR DETERMINING DRIVING CONDITIONS OF A VEHICLE IN ADVANCE

(30) Priorité: 30.06.2009 FR 0954450
(43) Date de publication de la demande: 09.05.2012
(73) Titulaire: VALEO VISION, 93012 Bobigny (FR)
(72) Inventeur: BRADAI, Benazouz, F-93500 Pantin (FR); HERBIN, Anne, F-94700 Maisons Alfort (FR); BRASSET, Michel, F-68990 Heimsbrunn (FR); LAUFFENBERGER, Jean-Philippe, F-68170 Rixheim (FR)
(86) Numéro de dépôt international: PCT/EP2010/058589
(87) Numéro de publication internationale: WO 2011/000714

(56) Documents cités:
- EP-A- 1 905 643
- EP-A- 2 017 807
- US-A- 5 562 336
- US-A- 6 141 617
- US-A1- 2004 111 209
- US-A1- 2005 027 419

## Description

La présente invention est relative à un procédé pour déterminer de manière prédictive des situations de conduite d'un véhicule. Elle concerne aussi un système pour effectuer une détermination prédictive de situations de conduite ainsi qu'un véhicule qui en est équipé.

Elle trouve son application notamment dans l'industrie automobile, avec en particulier la commande de systèmes d'aide à la conduite.

Avec le développement des technologies de l'électronique, des capteurs et des télécommunications, de nombreuses améliorations ont été proposées pour rendre plus sûre ou confortable la conduite des véhicules. Ces améliorations sont souvent qualifiées de systèmes d'aide à la conduite. Ces systèmes d'aide à la conduite influent généralement sur le comportement du véhicule en fonction de la situation routière de ce dernier.

De manière connue, certains systèmes d'aide à la conduite visent par exemple à commander l'orientation ou l'intensité d'un faisceau d'éclairage de la route en fonction de la situation routière. La situation routière reflète l'état ou l'environnement du véhicule. Elle est par exemple déterminée sur la base de la vitesse, ou de la position sur la voie du véhicule ou encore de la proximité du véhicule avec des obstacles, des piétons ou d'autres véhicules.

Les systèmes d'aide à la conduite qui reposent sur des capteurs embarqués ne permettent pas de traiter des informations suffisamment en avant du véhicule du fait de la portée relativement faible des capteurs. Par exemple, la portée d'une caméra embarquée né s'étend pas au delà de quelques dizaines de mètres en ligne droite. En outre les capteurs embarqués ne portent pas au-delà d'un virage. Ils ne permettent ainsi pas de prévoir une situation suffisamment en avance. En pratique ces systèmes reçoivent donc des applications limitées.

D'autres systèmes prévoient de combiner des données de cartographie issues d'un système de navigation avec des données issues de capteurs. Cette combinaison permet une confrontation de l'indice de ces deux types de données. D'autre part elle permet d'apporter des informations sur des zones difficilement accessibles aux capteurs et/ou situées loin en avant du véhicule typiquement à une distance d'une dizaine de kilomètres environ. Ainsi, il a été proposé un système permettant d'orienter le faisceau d'éclairage en fonction de la courbure de la route telle que définie par des capteurs, de ligne blanche notamment, et telle que calculée en fonction de coordonnées de points de cartographie représentant la route.

Par ailleurs, un seul capteur n'est en général pas suffisant pour avoir une connaissance suffisante de la situation. Pour confirmer une information, il est généralement nécessaire d'utiliser deux ou plusieurs capteurs afin d'exploiter leur redondance et leurs complémentarité.

Dans les systèmes de navigation actuels, la géométrie de la route est représentée par des points liés au centre de la route et espacés par des intervalles non réguliers. La saisie des coordonnées de ces points est source d'imprécision. D'autre part les moyens de localisation du véhicule n'offrent que trop rarement une précision inférieure à 10 ou 15 mètres. Une précision de 10 à 15 mètres est suffisante pour le guidage d'un point A à un point B. En revanche, cette précision des données de position issues des systèmes de navigation n'est pas suffisante pour des applications d'aide à la conduite, notamment des applications visant à améliorer la sécurité.

Outre des données de position, les points constituant les cartographies des systèmes de navigation sont également caractérisés par des attributs. Un attribut décrit l'environnement routier du point auquel il est associé et en particulier l'infrastructure et les aménagements du réseau routier en ce point. Il comprend par exemple l'une des informations suivantes: nombre de voies de circulation, limitation de vitesse, intersection, rond-point, virage, ligne droite, tunnel etc.

En se basant sur la position du véhicule et en associant aux segments et aux points de la cartographie des attributs décrivant l'environnement du véhicule, on établit ainsi un horizon électronique. Cet horizon électronique représente une image des chemins envisageables en amont du véhicule. Il est obtenu à partir du système de navigation à travers une plateforme hardware (incluant une unité de traitement, des capteurs de positionnement incluant un récepteur GPS ou Galileo part exemple, un gyroscope etc), ou plateforme électronique, et des modules softwares, ou modules logiciels. En se basant sur la position actuelle du véhicule et en exploitant les attributs associés aux points; l'horizon électronique décrit l'environnement du véhicule.

Ces systèmes de navigation ne peuvent apporter qu'une information ponctuelle par rapport à la position du véhicule. Ils ne permettent pas de fournir une vue continue et événementielle d'une situation de conduite en avant du véhicule. Ceci s'avère pénalisant alors même que l'avancée continue du véhicule nécessite une commande elle aussi continue des systèmes d'aide à la conduite. L'intérêt des systèmes de navigation pour commander les systèmes d'aide à la conduite s'en trouve ainsi inévitablement limitée.

Le document US2005/0027419 divulgue un système prédictif, dans lequel des données relatives à un contexte routier sont associées associant à des points successifs. Le faisceau d'éclairage est modifié à chaque donnée différente.

La présente invention a pour objectif d'apporter une solution aux limitations évoquées précédemment. Plus particulièrement elle vise à fournir de manière prédictive une description événementielle et continue de l'environnement en avant du véhicule.

A cet effet, on prévoit selon l'invention un procédé pour déterminer de manière prédictive des situations routières d'un véhicule, comportant les étapes suivantes :
- on obtient à partir d'un système de navigation des points définissant au moins un chemin possible situé en avant du véhicule,
- pour chaque point on extrait du système de navigation au moins un attribut décrivant l'environnement routier associé à ce point considéré,
- on compare l'attribut du point considéré à celui du point précédent,
- si les attributs sont identiques, on en déduit une situation de conduite de sorte que ladite situation de conduite soit fonction de l'attribut du point précédent,
- si les deux attributs sont différents, on en déduit une fin de situation de conduite correspondant au point précédent et on détermine une transition vers une nouvelle situation de conduite en fonction de l'attribut du point considéré, de sorte à définir pour ce chemin une succession de situations de conduite
- on identifie un ensemble de points successifs et on associe aux points de cet ensemble un contexte routier commun.

Ainsi on obtient une succession de situations de conduite anticipées et que s'apprête à aborder le véhicule, cette succession de situations de conduite formant un nouvel ensemble dénommé « horizon électronique évènementiel» dans le cadre de la présente demande, qu'on dénommera « horizon » ci-après par simplification. Cet horizon peut par exemple comprendre l'ensemble des situations possibles jusqu'à une certaine distance du véhicule, d'où l'emploi du terme horizon. Cette distance dépend de l'horizon électronique fourni par le système de navigation, par exemple elle peut être comprise entre 10 et 12 kilomètres. A la différence du système de navigation classique qui fournit directement des situations ponctuelles, le procédé selon la présente invention apporte des situations événementielles et continues. Elles permettent par conséquent de commander en continu des systèmes d'aide à la conduite.

En effet sur un parcours, si plusieurs points présentent des données différentes alors que le contexte routier n'a pas changé, les procédés classiques d'identification de la situation routière à partir d'information ponctuelle ne refléteront pas la réalité. Par exemple, dans le cas d'une autoroute traversant une ville, le contexte routier réel sera toujours une autoroute. Cependant, certains points de la navigation peuvent alors indiquer une autoroute, d'autres peuvent indiquer une ville. Ces indications peuvent même alterner. Le procédé classique d'identification du contexte routier va alors indiquer une alternance ville/autoroute, qui ne correspond pas à la situation réelle. Lorsque par exemple ce procédé classique est appliqué à la commande d'un faisceau d'éclairage, pour passer d'un faisceau autoroute (motorway en anglais) à un faisceau ville, les dispositifs d'éclairage passeront en permanence et fréquemment d'un faisceau à l'autre, alors que le contexte routier reste identique. Certains points de la navigation peuvent même indiquer à la fois deux contextes, par exemple autoroute et ville pour un même point dans l'exemple précité ; dans cet exemple on risque alors d'avoir un éclairage quasi-stroboscopique.

En revanche, le procédé selon la présente invention permettra de commander en continu des systèmes d'aide à la conduite, grâce à la déduction d'un contexte routier commun. Il permettra donc d'éviter les inconvénients précités. Par exemple, le véhicule restera en faisceau d'éclairage autoroute, même en traversant une ville.

Ainsi préférentiellement, le procédé selon l'invention identifie donc un ensemble de points successifs, où au moins une partie desdits points successifs présentent des données de contextes routiers différentes et/ou certains points présentent plusieurs données de contextes routiers différents pour un même point, et on associe aux points de cet ensemble un contexte routier commun.

Le procédé selon l'invention pourra en outre présenter, de manière facultative, au moins l'une quelconque des caractéristiques suivantes :
- l'attribut est l'une des données suivantes : une intersection, un rond-point, un virage, une ligne droite, une intersection en rond-point, une intersection en virage, une intersection en ligne droite, un tunnel, un pont.
- on commande un système d'aide à la conduite en fonction de la situation de conduite déterminée de manière prédictive. En permettant de déterminer les situations de conduite à venir, l'invention fournit une vision événementielle et continue de l'horizon du véhicule. Cette notion d'évènements n'est pas au sens discret, c'est-à-dire non pas au sens de ponctuel mais au sens de situation ou état de conduite. On peut ainsi commander en continu et de manière prédictive un système d'aide à la conduite ou encore adapter les paramètres d'un système d'aide à la conduite par rapport à la situation. Le système d'aide à la conduite effectue par exemple au moins l'une des opérations suivantes : actionnement d'un système d'éclairage de la route intégré au véhicule, détection de présence de piétons, de véhicules ou de panneaux de signalisation, régulation de vitesse du véhicule. Le système d'aide à la conduite peut également réaliser une opération de passage d'un mode de conduite à un autre, par exemple passage d'un mode de propulsion thermique du véhicule à un mode de propulsion électrique du véhicule. Les opérations réalisées par le système d'aide à la conduite peuvent être effectuées en adaptant l'angle d'ouverture du radar en fonction de la situation de conduite.

- pour chaque point, on extrait à partir du système de navigation un attribut additionnel portant sur une donnée de contexte routier et on enrichit la détermination de la situation de conduite avec la donnée de contexte routier. La donnée de contexte routier est l'une parmi les données suivantes : « ville », « hors ville », « autoroute », « autre ». Ainsi, l'invention prend non seulement en compte des données d'attributs mais également le contexte de l'environnement situé en avant du véhicule. La vision prédictive basée sur les attributs est donc enrichie d'une information contextuelle. Les situations de conduite sont par conséquent décrites avec plus de précision. Par exemple, l'invention fournit une information différente s'il s'agit d'une ligne droite en ville ou sur autoroute. Cette information est particulièrement utile lorsqu'il s'agit par exemple de commander un faisceau d'éclairage.
- on identifie un ensemble de points successifs présentant une alternance de données de contextes routiers et on associe aux points de cet ensemble un contexte routier commun. Ainsi, si les données issues du système de navigation présentent une alternance non compatible avec la réalité, le procédé détecte cette incohérence et attribue à cet ensemble de points un contexte commun. La continuité de la vision événementielle générée est donc préservée. Le système d'aide à la conduite est par conséquent toujours commandé en continu. Selon un mode préféré de réalisation on hiérarchise tous les contextes routiers et on choisit comme contexte routier commun le contexte routier hiérarchiquement supérieur parmi les contextes routiers de cet ensemble de points. Par exemple l'ensemble de points successifs présente une alternance des données de contextes « ville » et « autoroute », et le contexte routier commun associé à cet ensemble de points est le contexte routier « autoroute ». Si une autoroute traverse une ville, il y a de fortes chances pour que le système de navigation indique une succession de points présentant une alternance de contextes « villes » et « autoroute ». L'invention permet ainsi de lever cette incohérence et d'attribuer le contexte commun « autoroute » à l'ensemble de ces points. La situation de conduite sera donc bien associée au contexte « autoroute ». Le système d'aide à la conduite, s'il s'agit d'un système de commande de faisceaux lumineux demeurera par exemple en feux d'autoroute et ne passera pas en feux de ville.
- les étapes de comparaison des attributs, de déduction des transitions et de détermination des situations de conduite sont effectuées par un automate d'états finis.
- les points pour lesquels les situations de conduite sont déterminées correspondent aux points d'un itinéraire défini par le système de navigation en fonction d'une destination indiquée par l'utilisateur ou correspondent, si aucune destination n'est indiquée par l'utilisateur, aux points d'un itinéraire le plus probable. L'itinéraire le plus probable est défini sur la base d'un historique de conduite et/ou de données de cartographie, par exemple le type de route sur lequel on roule. Si on roule en autoroute par exemple il y a une plus forte probabilité qu'on y reste que d'en sortir.
- on calcule un indice de confiance associé à la détermination de la situation de conduite. On commande le système d'aide à la conduite uniquement si l'indice de confiance est supérieur à un seuil. L'indice de confiance est fonction d'au moins l'un parmi les paramètres suivants : localisation du véhicule par des moyens de localisation par satellite, précision de la numérisation de la cartographie, date de mise à jour de la cartographie, environnement du véhicule, mode de guidage sélectionné ou non.
- on fusionne des données issues d'au moins un capteur embarqué et de données issues ou à destination du système de navigation. Cette étape de fusion est opérée de sorte que les données issues du capteur enrichissent les données issues ou à destination du système de navigation pour déterminer des situations de conduite de manière plus précise.
- de manière additionnelle ou alternative, l'invention est agencée de sorte que les données issues du capteur suppléent les données issues ou à destination du système de navigation pour déterminer des situations de conduite même lorsque les informations issues des moyens de localisation ne sont pas exploitables.

On prévoit également dans le cadre de l'invention un système pour déterminer de manière prédictive des situations de conduite d'un véhicule. Ce système comprend un dispositif de navigation embarqué et des moyens de traitement aptes à mettre en oeuvre le procédé selon l'une des caractéristiques précédentes. Le système comporte un automate d'états finis pour la mise en oeuvre d'une partie au moins des étapes précédentes.

L'invention porte en outre sur un véhicule comportant un système selon le paragraphe précédent.

D'autres caractéristiques, buts et avantages de la présente invention apparaîtront à la lecture de la description détaillée qui va suivre, et en regard des dessins annexés, donnés à titre d'exemples non limitatifs et sur lesquels :
La figure 1 schématise les différentes étapes d'un exemple de procédé selon l'invention.
La figure 2 est une table de correspondance présentant des exemples de situations de conduite en fonction des attributs portés par des points de cartographie.
La figure 3 illustre un exemple de cartographie sur lequel peut se baser l'invention.
La figure 4 dresse un exemple de liste de contextes utilisés pour déterminer les situations de conduite.
La figure 5 schématise les différentes étapes d'un autre exemple de procédé selon l'invention.
La figure 6 décrit un exemple d'analyse mise en oeuvre par un automate d'états finis dans le cadre de l'invention.
Les figures 7 illustre un autre exemple d'application de l'invention.
La figure 8 illustre un exemple de cartographie pour encore un autre exemple d'application de l'invention.
La figure 9 décrit l'analyse mise en oeuvre par un automate d'états finis dans le cadre de l'exemple d'application de la figure 8.
La figure 10 est un tableau synthétisant des stratégies d'éclairage pouvant être appliquées dans le cadre de la mise en oeuvre de l'invention.
La figure 11 illustre un exemple de calcul d'indice de confiance selon l'invention.
La figure 12 décrit un exemple de système selon l'invention

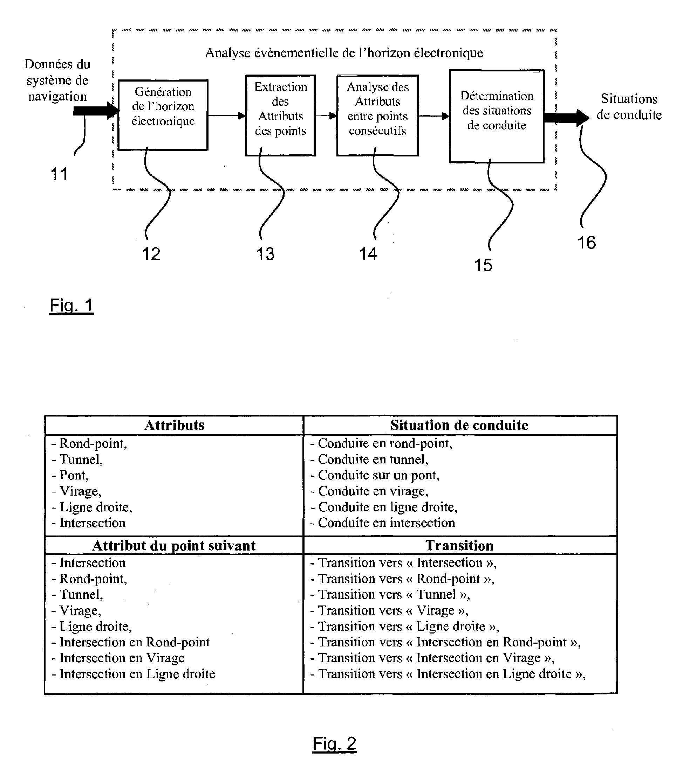

En référence à la figure 1 on a illustré les différentes étapes d'un exemple de procédé de détermination d'une situation routière selon l'invention.

On obtient à partir d'un système de navigation des points définissant au moins un chemin possible situé en avant du véhicule (étape 11).

L'invention fait intervenir un système de navigation. De manière connue un système de navigation comprend notamment des moyens de localisation du véhicule et une base de données de cartographie. Typiquement, les moyens de localisation intègrent un dispositif de localisation par satellite (GPS ou Galileo dans l'avenir) avec un récepteur-émetteur embarqué à bord du véhicule.

Chaque chemin est représenté par un ensemble de points dont la position est enregistrée dans les données de cartographie.

En outre, les données de cartographie comprennent des attributs associés aux points. Un attribut décrit l'environnement routier du point auquel il est associé et comprend par exemple l'une des informations suivantes: nombre de voies de circulation, limitations de vitesse, intersection, rond-point, virage, ligne droite, tunnel, pont etc. La figure 2 dresse une liste de certains des attributs utilisés dans le cadre de l'invention.

La combinaison des moyens de localisation et des données de la cartographie permet ainsi de définir un horizon électronique en avant du véhicule (étape 12). Avantageusement, cet horizon électronique est constitué de l'ensemble des chemins possibles en amont du véhicule définis par la position des points et des informations d'environnement routier associées à ces points.

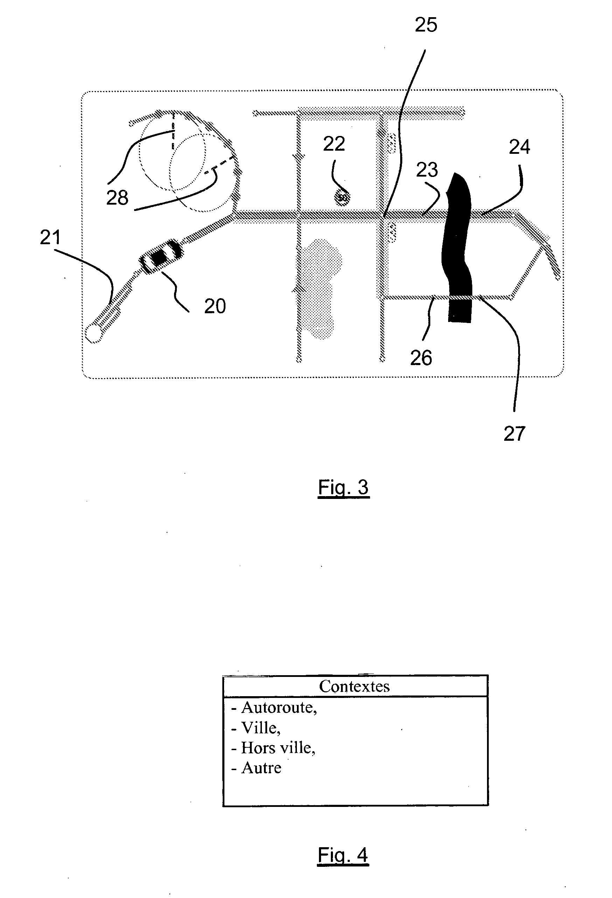

La figure 3 illustre un exemple d'horizon électronique. Cette figure fait apparaître l'emplacement du véhicule 20 et différents points de la cartographie. Certains de ces points, appelés noeuds symbolisent des intersections 25. Les autres points symbolisant la route sont appelés points de forme. Ces différents points permettent de délimiter des segments (seg01, seg02, etc.) et de définir l'ensemble des chemins empruntables. Ces chemins apparaissent sur la figure 3. Cette figure fait également apparaître des attributs associés aux différents points comme par exemple : un nombre de voies 21, une limitation de vitesse 22, une entrée de tunnel 23, une sortie de tunnel 24, le début d'un pont 26, la fin d'un pont 27, le rayon de courbure de la route 28.

De manière caractéristique à l'invention on prévoit d'extraire les attributs associés aux points de l'horizon électronique (étape 13).

Pour un point donné de l'horizon, on analyse les attributs de ce point donné et on retient ceux qui appartiennent à un ensemble prédéterminé, tel que l'ensemble indiqué en figure 2. On compare cet attribut à celui du point précédent (étape 14).

On désigne par point précédent, par rapport à un point considéré, un point adjacent au point considéré, situé sur le même chemin que le point considéré et disposé entre le véhicule et le point considéré. On désigne par point suivant, par rapport à un point donné, un point consécutif au point donné selon le sens d'avancée du véhicule.

Si les attributs du point considéré et du point précédent sont identiques, on en déduit alors une situation de conduite correspondant à l'attribut du point précédent (étape 15). On caractérise ainsi une situation de conduite continue entre les deux points. Tant que des attributs consécutifs sont identiques, on conserve alors une même situation de conduite. L'invention offre ainsi une description événementielle et continue de l'environnement du véhicule. Sur la base de cette situation de conduite, on peut alors fournir une commande continue par exemple à un système d'aide à la conduite (étape 16). En déterminant les situations de conduite dans l'horizon électronique à l'avance on peut les sauvegarder et appliquer la commande correspondant aux situations de conduite qui sont déterminées par le procédé de la présente invention.

La correspondance entre les attributs et les situations de conduite est par exemple effectuée au moyen d'une table de correspondance du type présenté en figure 2. Un exemple de table est proposé en figure 2. Par exemple, si deux attributs consécutifs sont associés à l'attribut « tunnel », le procédé en déduit la situation de conduite « conduite en tunnel » entre ces deux points.

Si les attributs du point considéré et du point précédent ne sont pas identiques, on en déduit alors une fin de situation de conduite basée sur le point précédent. On en déduit également une transition de conduite et un début d'une nouvelle situation de conduite. La nature de cette transition et la nature de la nouvelle situation de conduite sont dictées par le point considéré.

La détermination de la transition de conduite en fonction de l'attribut du point considéré peut également être basée sur une table de correspondance. Par exemple, si le point précédent est associé à l'attribut « ligne droite » et que le point considéré est associé à l'attribut « rond point », alors le procédé en déduit une fin de situation de « conduite en ligne droite » et détermine une transition vers une situation à venir. Selon cette table de correspondance cette transition étant du type « transition vers un rond-point ».

On réitère ces étapes pour un ensemble de points consécutifs. Tant que les attributs sont identiques, le procédé en déduit une situation de conduite continue. On obtient ainsi une succession de situations de conduite dont les débuts et fins sont délimités par les transitions de conduite correspondantes.

L'invention permet ainsi de générer par anticipation un horizon électronique évènementiel recensant toutes les situations de conduite en avant du véhicule. Cet horizon ne se limite pas à donner des informations ponctuelles mais prédit une succession d'événements, ces évènements correspondant à des situations de conduite. L'horizon électronique généré par l'invention peut ainsi être qualifié d'horizon événementiel.

L'horizon événementiel est généré pour un emplacement du véhicule. Typiquement sa portée est de l'ordre de 10 km. Au fur et à mesure que le véhicule se déplace, cet horizon est réactualisé en prenant en compte des données de cartographie suffisamment en avant du véhicule pour préserver le caractère prédictif de cet horizon. Le système selon l'invention peut ainsi être qualifié de générateur d'horizon glissant événementiel ou de capteur d'horizon glissant événementiel.

L'horizon glissant événementiel généré par l'invention offre par conséquent une analyse de l'environnement très proche de l'analyse menée par le conducteur.

Avantageusement, l'analyse de l'environnement et la génération de la commande sont découplées. Ceci permet notamment d'alléger et de rendre plus évolutif le programme d'analyse.

Pour reprendre l'exemple de la figure 3, l'horizon glissant événementiel anticipe parmi les situations de conduite possibles après l'intersection 25 les situations de conduite suivantes : conduite en ligne droite (seg12), puis conduite en tunnel (entre les points 23 et 24), puis transition vers une conduite en ligne droite, puis conduite en ligne droite etc.

De manière préférée, le système selon l'invention détermine en premier lieu les situations de conduite sur la base d'attributs appartenant à un premier ensemble d'attributs prédéfinis. Typiquement, cet ensemble regroupe les attributs listés dans le tableau non exhaustif de la figure 2: intersection, rond-point, tunnel, pont, ligne droite, virage. Ces attributs correspondent à un premier niveau d'information. Ils renseignent sur l'environnement routier direct du véhicule et caractérise la route elle-même.

De manière avantageuse, le système selon l'invention extrait pour chacun des points un attribut additionnel. Cet attribut additionnel appartient à un second ensemble d'attributs prédéfinis. Cet attribut additionnel apporte un deuxième niveau d'information qui est supérieur, c'est-à-dire qui est plus général que le premier niveau. Il caractérise en particulier le contexte routier du véhicule. Il est désigné donnée de contexte. Typiquement, cet ensemble regroupe les données de contexte listées dans le tableau de la figure 4: ville, autoroute, hors ville, autre. Le terme « autre » représente le cas où le système de navigation n'a pas d'information sur le contexte. Il permet ainsi de prendre en considération la sûreté de fonctionnement afin de passer en mode dégradé de commande, par exemple une commande en fonction de l'angle au volant. De manière générale, lorsque le système ne dispose pas d'information de contexte ou d'attribut, il met fin à la situation de conduite en cours et ne génère plus de situation de conduite jusqu'à l'obtention de nouveaux attributs et/ou contextes.

Le système selon l'invention extrait ces données de contexte et les analyses pour affiner la description des situations de conduite anticipées.

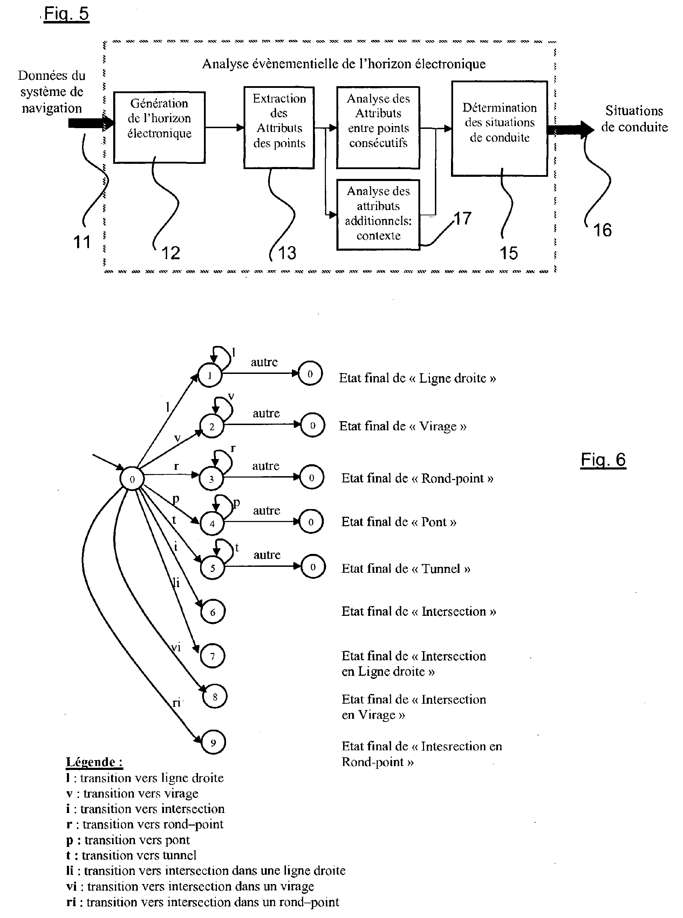

La figure 5 illustre les différentes étapes d'un procédé de détermination d'une situation routière prenant en compte des attributs additionnels. Elle fait apparaître l'étape supplémentaire 17, d'analyse et de prise en compte des contextes pour prédire les situations de conduite.

En reprenant l'exemple de la figure 3, si le véhicule évolue effectivement en « ville », le système extrait les attributs mentionnés précédemment ainsi que le contexte ville. Il détermine alors les situations de conduite suivantes après l'intersection : « conduite en ligne droite en ville » (seg12), puis une transition vers une « conduite en tunnel en ville »,marquant le début d'une situation de « conduite en tunnel en ville » (entre les points 23 et 24), puis une transition vers « une conduite en ligne droite en ville », marquant le début d'une situation de « conduite en ligne droite en ville », etc.

Avantageusement, l'utilisation de ces données de contextes permet d'enrichir le niveau d'information des situations de conduite prédites. On peut alors définir avec plus de précision une loi de commande basée sur les situations de conduite et servant à piloter un système d'aide à la conduite.

De préférence, les différentes étapes mentionnées ci-dessus font intervenir un automate d'états finis. Le système comprend en outre des moyens de stockage de données nécessaires à l'identification de situations de conduite et des transitions en fonction des attributs. Avantageusement, il comprend des moyens pour générer une commande agissant sur un système d'aide à la conduite.

La Figure 6 décrit un exemple de structure d'analyse constituant l'automate d'états finis.

A partir de l'état initial « 0 », la scrutation de l'horizon électronique permet d'identifier les transitions qui correspondent aux situations de conduite déterminées par les états de l'automate. Ensuite, tant qu'aucun nouvel attribut n'est détecté dans l'horizon électronique, l'automate reste dans l'état correspondant. Suite à la détection d'un changement d'attribut (« autre »), une fin de la situation de conduite est signalée (« état final »). Une nouvelle transition correspondant à la nouvelle situation de conduite est générée selon cet attribut. A l'exception des intersections, l'ensemble des situations considérées est traité de cette manière quel que soit le nombre de transition effectué (une ou plus).

Lorsqu'en un point considéré une intersection est identifiée, cette dernière n'étant matérialisée dans la base de données cartographique que par un seul point constituant à la fois le début et la fin de cette situation, l'automate, après détection de cette situation, atteint immédiatement l'état final au point considéré.

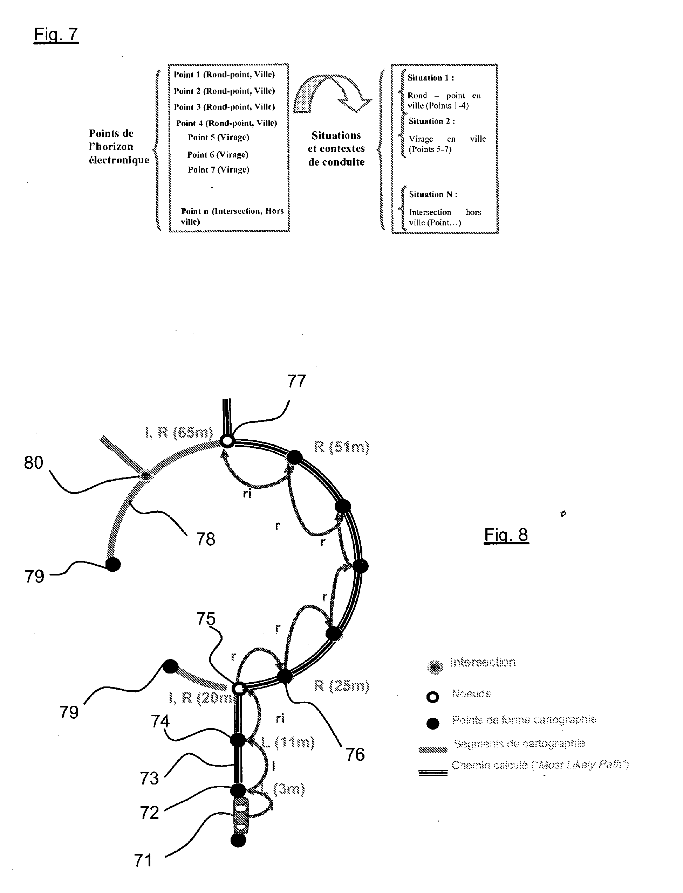

Finalement, le capteur d'horizon glissant événementiel définit les chemins accessibles au véhicule sous la forme d'un arbre décrivant toutes les situations de conduite et les contextes associés, en fonction de leur imminence. Un exemple de génération de situations de conduite à partir des points de l'horizon électronique fourni par la cartographie est schématisé en figure 7. Un ensemble de n points (point 1 à n) permet de déterminer N situations de conduite (situations 1 à N avec n>N). Ces n points sont associés à des attributs de premier niveau (rond-point, virage, intersection) et des contextes routiers ou attributs de second niveau (ville et hors ville). Les situations de conduite sont générées sur la base de l'ensemble des attributs de premier niveau et des contextes routiers : « conduite en rond-point en ville » pour les points 1 à 4, « conduite en virage en ville » pour les points 5 à 7, intersection hors ville pour le point n.

L'invention peut être mise en oeuvre que le conducteur ait ou non indiqué au système de navigation sa destination.

Dans le cas où cette destination est indiquée, les points pour lesquels les situations de conduite sont déterminées correspondent aux points de l'itinéraire défini par le système de navigation en fonction de cette destination.

Dans le cas contraire, les points pour lesquels les situations de conduite sont déterminées correspondent aux points de l'itinéraire le plus probable. De nombreuses méthodes bien connues permettent de déterminer cet itinéraire le plus probable. De manière générale, ces méthodes prennent en compte des données de l'historique de navigation et/ou des données de cartographie, par exemple le type de route sur lequel on roule. Si on roule en autoroute par exemple il y a une probabilité plus forte qu'on y reste que d'en sortir.

De manière préférée, et que le mode guidage soit activé ou non, on prévoit d'analyser l'ensemble des points de l'horizon électronique de sorte à définir un horizon comportant tous les chemins possibles. Ainsi, toutes les situations de conduite sont anticipées.

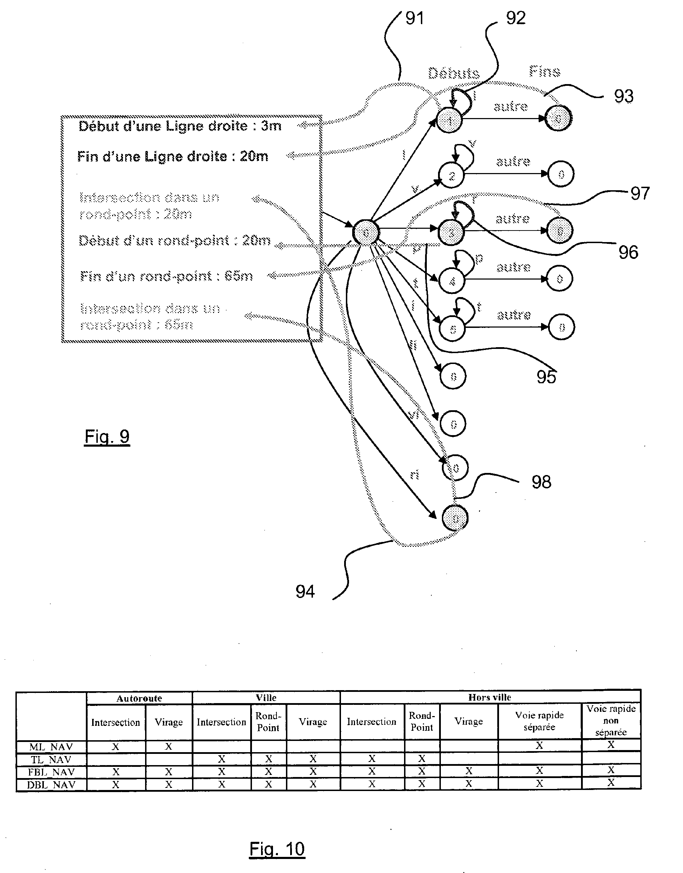

En référence aux figures 8 et 9, un exemple d'application de l'invention va maintenant être détaillé.

Le système détermine le chemin que le véhicule a le plus de probabilité d'emprunter. Ce chemin est représenté par deux traits fins de part et d'autre d'un trait plus épais. Le système selon l'invention extrait les différents points de forme (72-74, 76, 79.), les noeuds (75, 77, 80), ces noeuds représentant les intersections de la cartographie. Il analyse les attributs de ces points. Par analyse de l'attribut du premier point 72 situé au devant du véhicule 71, il identifie le début d'une ligne droite à 3 mètres (attribut « L ») (étape 91). L'analyse du point 74 portant également l'attribut ligne droite (attribut « L ») permet de déterminer la situation de conduite « conduite en ligne droite » sur le segment 73 délimité par les points 72 et 74. L'automate ne change donc pas d'état sur cette portion (étape 92). Le noeud 75 est associé à un attribut d'intersection en rond-point (attribut « I, R »). Ce noeud 75 déclenche un changement d'état de l'automate et la fin de la situation de conduite (étape 93) « conduite en ligne droite ». Le système en déduit que cette situation de conduite prend fin à 20 mètres.

Ce même noeud 75 marque une situation de transition vers une intersection en rond point (étape 94). Il marque également le début d'une nouvelle situation de conduite correspondant à une « conduite en rond-point » qui débute à 20 mètres (étape 95). Les cinq points suivant sont associés à l'attribut de rond-point (« R »). L'automate ne change donc pas d'état (étape 96) jusqu'au noeud 77 qui porte l'attribut d'intersection en rond-point (attribut « I, R »). A nouveau l'automate change d'état, détecte la fin de la situation de conduite « conduite en rond-point » à 65 mètres (étape 97) et détermine une transition vers une intersection en rond-point (étape 98).

L'invention permet ainsi de générer des situations de conduite particulièrement proches de la réalité même dans des environnement complexes comme le sont les ronds-points. L'horizon événementiel décrit est également parfaitement continu. Grâce à l'invention on peut alors déduire de ces situations de conduite des lois de commande parfaitement cohérentes et continues.

En prenant pour hypothèse que le contexte associé à chacun de ces points et le contexte « ville » et en se basant sur le tableau de la figure 10 décrit plus en détail par la suite et qui synthétise des stratégies de commande d'un faisceau d'éclairage, on aurait donc pour les segments de la ligne droite un éclairage normal et pour le rond-point un faisceau élargi par une fonction désignée TL_NAV. Cette fonction, comme explicité par la suite correspond à un élargissement du faisceau.

Une loi de commande basée sur les informations ponctuelles fournies par le système de navigation conduirait à une commande non pas continue mais ponctuelle. Une telle loi conduirait par exemple à une succession incohérente d'allumages et d'extinctions en particulier de nuit en rond-point hors ville.

De manière préférée, l'invention est agencée de sorte à identifier si un ensemble de points successifs présente une alternance incohérente de données de contextes routiers. Cette alternance peut concerner deux ou plus contextes routiers différents. Elle n'est pas forcement de 1 pour 1. L'invention est conformée pour identifier si la fréquence d'alternance est incompatible avec la réalité.

Par exemple, il arrive fréquemment que lorsqu'une autoroute traverse une ville, certains points, voire tous les points, de la cartographie présentent chacun à la fois un contexte « ville » et un contexte « autoroute ». Cela peut générer une commande alternée entre « ville » et « autoroute » si on utilise pour la commande les données de contexte en tant que telles, c'est-à-dire sans analyse événementielle de l'horizon comme le propose l'invention. Appliquée par exemple à une commande de faisceau d'éclairage, une telle commande génère une alternance rapide d'allumages et d'extinctions des phares, ce qui n'est pas acceptable en terme de sécurité et de confort de conduite.

L'invention est également configurée pour associer à cet ensemble de points un contexte routier commun. On préserve donc la continuité de l'horizon glissant événementiel généré. La commande basée sur cet horizon est par conséquent également commandée en continu.

Afin de déterminer le contexte routier commun qu'il convient de retenir pour l'ensemble de ces points, on hiérarchise tous les contextes routiers et on choisit comme contexte routier commun le contexte routier hiérarchiquement supérieur.

En reprenant le cas précédent de l'autoroute traversant une ville, on assigne au contexte « autoroute » un niveau hiérarchique supérieur au contexte « ville ». Ainsi, le contexte routier commun qui est retenu dans ce cas est le contexte routier « autoroute ». La situation de conduite générée prendra donc en compte le contexte « autoroute » pour cet ensemble de points. Cette situation de conduite anticipée par l'invention traduit donc bien la réalité malgré l'incohérence introduite par les données de navigation. La loi de commande basée sur les situations de conduite sera donc parfaitement adaptée. Si cette loi de commande porte sur l'éclairage, les feux d'éclairage en autoroute « Motorway Lighting » demeureront donc allumés sur toute la portion d'autoroute.

En référence à la figure 10, des stratégies de commande d'un faisceau d'éclairage du véhicule vont maintenant être exposées. Plus particulièrement, le capteur d'horizon glissant événementiel objet de l'invention reçoit pour application la commande d'un système d'éclairage avant avancé généralement désigné par son acronyme anglo-saxon AFS (Adaptive Front lighting System).

De manière connue, un système AFS propose les fonctions classiques suivantes:

### - Fonction Pseudo - TL (Eclairage en ville - Town Lighting)

Cette fonction a pour objectif d'élargir le faisceau lumineux (gauche et droit) en circulation urbaine. Ce dispositif est activé uniquement en fonction de la vitesse du véhicule. Typiquement, il est activé si la vitesse passe en dessous d'un seuil, par exemple de 50 Km/h. La loi de commande de la fonction AFS dépend donc uniquement d'un capteur de vitesse.

### - Fonction Pseudo - ML (Motorway Lighting)

Cette fonction consiste à monter les phares en autoroute. Elle est activée uniquement en fonction de la vitesse du véhicule, typiquement si la vitesse franchit un seuil, par exemple de 80 Km/h. La loi de commande de la fonction AFS dépend donc uniquement d'un capteur de vitesse.

### - FBL (Fixed Bending Light)

Cette fonction prévoit un éclairage progressif de l'accotement intérieur gauche ou droit en fonction de la rotation du volant. La loi de commande de la fonction AFS dépend donc uniquement d'un capteur de position angulaire.

### - DBL (Dynamic Bending Light)

Cette fonction prévoit une rotation progressive des optiques d'éclairage en fonction de la rotation du volant. La loi de commande de la fonction AFS dépend donc uniquement d'un capteur de position angulaire.

Aucune de ces fonctions n'est commandée par une loi de commande prenant en compte l'environnement du véhicule.

De manière alternative certains systèmes AFS prévoient que la commande de ces fonctions s'effectue non pas en fonction d'une donnée d'angle au volant (FBL, DBL) mais en fonction de la position de points fournis par la cartographie du système de navigation. Ces points permettent de définir un profil routier et de calculer la courbure de la route. La loi de commande se base sur la courbure de la route pour déclencher un éclairage progressif de l'accotement intérieur (gauche, droit) ou une rotation progressive des optiques d'éclairage.

L'invention propose de nouvelles lois de commande. Ces nouvelles lois de commande permettent d'améliorer la commande des fonctions du système d'éclairage avant avancé (AFS). A cet effet, on prévoit de baser les lois de commande sur les situations de conduite telles que déterminées de la manière indiquée ci-dessus.

Le tableau de la figure 10 présente des stratégies de commande particulièrement avantageuses pour divers fonctions d'éclairage de type AFS en fonction des situations de conduites définies d'une part par les attributs de premier niveau (intersection, rond-point, ligne droite, virage, voie rapide séparée ou non) et d'autre part par les contextes routiers (autoroute, ville, hors ville). Ce tableau, présente les fonctions suivantes :

### - TL_NAV

Cette fonction consiste à élargir le faisceau lumineux, gauche ou droit, en circulation urbaine. Cette fonction est commandée par une loi de commande qui se base sur les situations de conduite telles que détectées par la méthode objet de la présente invention. Conformément aux stratégies définies dans le tableau de la figure 10, si une situation de conduite portant le contexte « conduite en ville » est déterminée, alors la fonction d'élargissement du faisceau peut être déclenchée. Si le contexte détecté est « conduite hors ville » et que la situation de conduite déterminée sur la base de l'attribut de premier niveau est « conduite en virage » ou « conduite en voie rapide séparée » ou « conduite en voie rapide non séparée», alors la loi de commande empêchera l'élargissement du faisceau. Avant d'arriver à un rond-point, la situation de conduite « conduite en rond-point hors ville » sera déterminée. Une fois le véhicule parvenu au rond-point, la loi de commande autorisera à nouveau l'élargissement du faisceau.

### - ML_NAV

Cette fonction consiste à appliquer l'éclairage adapté à l'autoroute lorsqu'une situation de conduite « conduite sur autoroute » ou « conduite hors ville sur une voie rapide séparée » ou « conduite hors ville sur une voie rapide non séparée » est détectée.

### - FBL_NAV

Cette fonction prévoit un éclairage progressif de l'accotement intérieur (gauche, droit) en virage en fonction des situations de conduite et des contextes déterminés selon la méthode de l'invention et identifiés dans le tableau de la figure 10.

### - DBL_NAV

Cette fonction prévoit une rotation progressive des optiques d'éclairage en virage en fonction des situations de conduite et des contextes déterminés selon la méthode de l'invention et identifiés dans le tableau de la figure 10.

L'invention s'avère particulièrement avantageuse lorsqu'elle est appliquée aux fonctions FBL_NAV et DBL_NAV. En effet, avec les fonctions FBL ou DBL classiques, l'éclairage progressif ou la rotation progressive des optiques est déclenchée par la rotation du volant. La fonction d'éclairage est donc déclenchée lorsque le véhicule a déjà amorcé le virage. Les solutions existantes ne permettent donc pas d'améliorer l'éclairage en entrée de virage. A l'inverse, le capteur d'horizon glissant événementiel selon l'invention permet d'anticiper bien en avance l'entrée dans un virage. L'éclairage progressif ou la rotation progressive des optiques est donc déclenchée suffisamment en avant du virage pour améliorer la visibilité dès l'entrée dans le virage.

Il en est de même en sortie de virage. L'invention anticipe la sortie de virage grâce au capteur d'horizon glissant événementiel et génère une commande en conséquent, bien avant que l'angle au volant ne permette de prédire la sortie de virage.

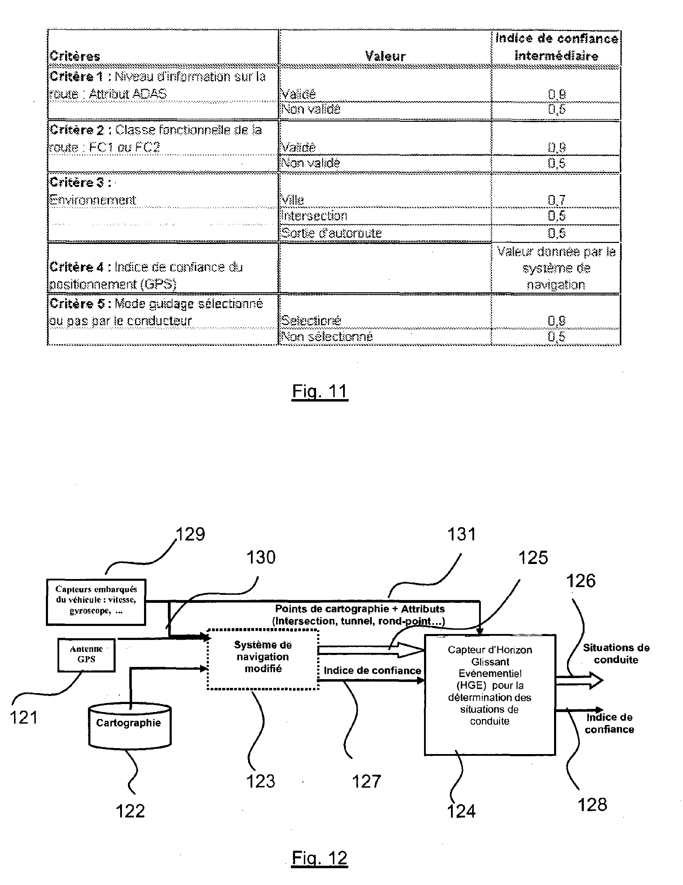

En outre, la loi de commande pour chacune de ces fonctions, en plus d'être basée sur les situations de conduite, peut également être basée sur des données issues de capteurs (vitesse ou angle au volant par exemple) ou sur les données de position des points de la cartographie. Cette combinaison de données sera décrite en détail en référence à la figure 12.

Ainsi, ces fonctions couplent les fonctions AFS classiques et les fonctions AFS assistées par la navigation. Par conséquent, l'invention améliore les lois de commande et permet d'optimiser les fonctions d'éclairage AFS.

Afin d'améliorer encore ces fonction d'éclairage AFS, la loi de commande prend en compte les particularités suivantes :
- La fonction FBL est toujours couplée avec la fonction DBL en autoroute, hors ville, sur les routes départementales, nationales et sur les voies rapides. Le véhicule a donc les feux de code allumés et les fonctions FBL et DBL sont actives.
- La fonction TL est prioritaire par rapport à la fonction FBL. Ainsi, on aura selon le cas un éclairage code+TL+DBL et non pas code+FBL+DBL. C'est le cas en ville ou en dehors de ville pour intersections et ronds-points.

L'activation de certaines des fonctions doit respecter la réglementation en vigueur.
- Au moins l'une des situations suivantes doit être vérifiée pour que la fonction TL soit enclenchée:
   - Le véhicule est en agglomération ET la vitesse du véhicule est inférieure à 80 Km/h,
   - Le véhicule est sur des routes équipées d'éclairage public ET la vitesse du véhicule est inférieure à 80 Km/h,
   - La vitesse du véhicule est inférieure à 50 Km/h.
- Pour que la fonction ML soit enclenchée il faut que la vitesse du véhicule soit supérieure à 70 Km/h et que les situations suivantes soient vérifiées :
- Le véhicule est sur autoroute ET/OU la vitesse du véhicule est supérieure à 110 Km/h.
   - Une attente de 2 minutes est nécessaire avant l'activation lorsque l'autoroute a été détectée

De manière préférée, l'invention définit un indice de confiance relatif à la situation de conduite déterminée par anticipation. Cet indice de confiance influence la mesure dans laquelle la loi de commande est appliquée au système d'aide à la conduite. Typiquement, si cet indice est inférieur à un seuil prédéfini, la loi de commande basée sur la situation de conduite n'est pas appliquée au système d'aide à la conduite et une commande basée sur d'autres capteurs non anticipatifs est appliquée dans ce cas. Par exemple dans le cas d'un éclairage AFS, on passe en commande AFS basée sur l'angle au volant ou sur la vitesse.

Préférentiellement, l'indice de confiance est calculé à partir d'un ou plusieurs des critères de la liste suivante non exhaustive :
- le niveau d'information de la route : ce critère témoigne en particulier de la précision de la cartographie.
- la classe fonctionnelle de la route : ce critère prend en compte la précision des attributs associés à une classe de route.
- l'environnement routier : ville, sortie d'autoroute, intersection etc.
- la précision du positionnement du véhicule par les moyens de localisation par satellite (GPS ou Galileo dans l'avenir),
- mode de guidage sélectionné (indication par l'utilisateur d'un itinéraire) ou non.
- la date de mise à jour de la cartographie.

Avantageusement, l'indice de confiance est calculé en prenant en compte chacun de ces critères. Pour le calcul de l'indice de confiance, on peut pondérer chacun de ces critères. Ces poids sont déterminés en fonction de la fiabilité des critères auxquels ils sont assignés. Ils peuvent être définis par expérience ou par apprentissage.

La figure 11 donne un exemple de calcul de l'indice de confiance du système de détermination des situations de conduite.

Dans un mode de réalisation particulier l'invention est agencée pour utiliser des données issues de capteurs embarqués. La figure 12 schématise un exemple d'un tel système.

L'invention comprend un système de navigation 123, recevant des données issues des moyens de localisation 121 par satellite. Ces moyens ont été décrits précédemment. L'invention comprend également une base de données 122 fournissant au système de navigation des données de cartographie.

Les données 125 issues du système de navigation sont transmises au capteur d'horizon glissant événementiel 124. Ce dernier inclut un automate d'états finis. Il détermine les situations de conduites 126. Ces situations de conduite sont par exemple destinées à être envoyées à un système d'aide à la conduite. Le système de navigation 123 fournit également un indice de confiance 127, correspondant à la précision de positionnement propre au système de positionnement par satellite, au capteur d'horizon glissant événementiel 124. Ce dernier calcule un indice de confiance, par exemple selon la méthode illustrée en figure 11, en y intégrant d'autres critères et transmet l'indice de confiance finalisé 128 avec les situations de conduite 126.

L'invention comprend également au moins un capteur embarqué 129 tel qu'un capteur de vitesse ou un gyroscopique renseignant sur l'angle au volant ou sur l'angle des roues.

Les données 130 du capteur embarqué 129 peuvent être transmises au système de navigation 123. Ces données 130 peuvent suppléer ou être fusionnées avec celles issues des moyens de localisation ou de la cartographie, en particulier lorsque le système de navigation fonctionne en mode dégradé. Par exemple, si le signal des moyens de localisation disparaît, les données d'angle au volant et/ou de vitesse peuvent permettre de continuer à localiser le véhicule sur la cartographie au moins temporairement.

Par ailleurs, les données 131 du capteur embarqué 129 peuvent être transmises au capteur d'horizon glissant événementiel 124. Ces données 131 sont alors combinées avec celles issues du système de navigation pour améliorer la détermination des situations de conduite. Par exemple, les données d'un capteur de vitesse permettent d'affiner les données issues des moyens de localisation portant sur la vitesse ou la position du véhicule. Pour les fonctions d'éclairage avant avancé de type Dynamic Bending Light consistant à entraîner en rotation les optiques, il est en effet important que la donnée de vitesse prise en compte par la loi de commande soit aussi proche que possible de la vitesse réelle du véhicule en entrée de courbe ou dans une courbe. Or, il est peu aisé d'obtenir une information précise de vitesse sur la seule base des moyens de localisation.

La fusion de données issues de capteurs embarqués et de données issues ou à destination du système de navigation permet donc de déterminer des situations de conduite de manière plus précise et en mode de fonctionnement dégradé.

En effet, le système d'aide à la conduite fonctionne en mode dégradé quand l'indice de confiance du capteur d'horizon glissant événementiel est en dessous du seuil prédéfini et passe ainsi en commande en mode dégradé utilisant les capteurs embarqués (par exemple le DBL basé sur l'angle au volant ou le ML basé sur la vitesse).

Avantageusement, l'invention utilise les données d'une pluralité de capteurs embarqués de types différents.

Cette fusion des données issues du système de navigation et des capteurs embarqués est par exemple mise en oeuvre pour les stratégies d'éclairage AFS décrites en référence à la figure 10.

La présente invention n'est pas limitée aux modes de réalisation décrits ci-dessus.

Notamment, bien qu'il soit avantageux d'analyser pour chacun des points en premier lieu les attributs (attributs de premier niveau) puis le contexte, l'analyse inverse pourra être effectuée. On peut également envisager de n'analyser que le contexte des points de l'horizon électronique.

## Revendications

1. Procédé pour déterminer de manière prédictive des situations routières d'un véhicule, comportant l'étape d'obtenir (11) à partir d'un système de navigation des points définissant au moins un chemin possible situé en avant du véhicule, comprenant de plus les étapes suivantes :
- pour chaque point on extrait (13) du système de navigation au moins un attribut décrivant l'environnement routier associé à ce point,
- on compare (14) l'attribut de ce point à celui du point précédent,
- si les attributs sont identiques, on en déduit une situation de conduite de sorte que ladite situation de conduite soit fonction de l'attribut du point précédent,
- si les deux attributs sont différents, on en déduit une fin de situation de conduite et on détermine une transition vers une nouvelle situation de conduite en fonction de l'attribut de ce point, de sorte à définir pour ce chemin une succession de situations de conduite,
- on identifie un ensemble de points successifs et on associe aux points de cet ensemble un contexte routier commun, **caractérisé en ce que** au moins une partie desdits points successifs présentent des données de contextes routiers différentes et/ou certains points présentent plusieurs données de contexte routiers différents pour un même point.

2. Procédé selon la revendication 1 dans lequel l'attribut est l'une des données suivantes : une intersection, un rond-point, un virage, une ligne droite, une intersection en rond-point, une intersection en virage, une intersection en ligne droite, un tunnel, un pont.

3. Procédé selon l'une quelconque des revendications précédentes dans lequel on commande un système d'aide à la conduite en fonction de la situation de conduite déterminée de manière prédictive.

4. Procédé selon la revendication précédente dans lequel le système d'aide à la conduite effectue au moins l'une des opérations suivantes :
- actionnement d'un système d'éclairage de la route intégré au véhicule,
- détection de présence de piétons, de véhicules ou de panneaux de signalisation,
- régulation de vitesse du véhicule
- passage d'un mode de propulsion thermique du véhicule à un mode de propulsion électrique du véhicule.

5. Procédé selon la revendication précédente, dans lequel les opérations sont effectuées en adaptant un angle d'ouverture d'un radar en fonction de la situation de conduite.

6. Procédé selon l'une quelconque des revendications précédentes dans lequel pour chaque point on extrait (17) à partir du système de navigation un attribut additionnel portant sur une donnée de contexte routier et on enrichit (15) la détermination de la situation de conduite avec la donnée de contexte routier.

7. Procédé selon la revendication précédente dans lequel la donnée de contexte routier est l'une parmi les données suivantes : « ville », « hors ville », « autoroute », « autre ».

8. Procédé selon la revendication précédente dans lequel on hiérarchise tous les contextes routiers et on choisit comme contexte routier commun le contexte routier hiérarchiquement supérieur parmi les contextes routiers de cet ensemble de points.

9. Procédé selon l'une quelconque des deux revendications précédentes dans lequel l'ensemble de points successifs présente une alternance des données de contextes « ville » et « autoroute », et le contexte routier commun associé à cet ensemble de points est le contexte routier « autoroute ».

10. Procédé selon l'une quelconque des revendications précédentes dans lequel les points pour lesquels les situations de conduite sont déterminées correspondent aux points d'un itinéraire défini par le système de navigation en fonction d'une destination indiquée par l'utilisateur ou correspondent aux points d'un itinéraire défini comme le plus probable.

11. Procédé selon l'une quelconque des revendications précédentes dans lequel on calcule un indice de confiance associé à la détermination de la situation de conduite.

12. Procédé selon la revendication précédente prise dans sa combinaison avec l'une quelconque des revendications 3 à 5 dans lequel on commande le système d'aide à la conduite uniquement si l'indice de confiance est supérieur à un seuil.

13. Procédé selon l'une quelconque des deux revendications précédentes dans lequel l'indice de confiance est fonction d'au moins l'un parmi les paramètres suivants : système de positionnement par satellite, précision de la numérisation de la cartographie, date de mise à jour de la cartographie, environnement du véhicule, mode de guidage sélectionné ou non.

14. Système pour déterminer de manière prédictive des situations de conduite d'un véhicule, caractérisé en que qu'il comprend un dispositif de navigation embarqué (123) et des moyens de traitement (124) agencés pour mettre en oeuvre le procédé selon l'une quelconque des revendications précédentes.

## Patentansprüche

1. Verfahren zur prädiktiven Bestimmung von Fahrsituationen eines Fahrzeugs, mit dem Schritt des Erfassens (11) von Punkten anhand eines Navigationssystems, die wenigstens einen vor dem Fahrzeug befindlichen, möglichen Weg definieren, ferner umfassend die folgenden Schritte:
- Abrufen (13) wenigstens eines Attributs aus dem Navigationssystem für jeden Punkt, das die diesem Punkt zugeordnete Fahrumgebung beschreibt,
- Vergleichen (14) des Attributs dieses Punktes mit dem des vorhergehenden Punktes,
- bei identischen Attributen daraus Ableiten einer Fahrsituation derart, dass die Fahrsituation von dem Attribut des vorhergehenden Punktes abhängt,
- bei zwei unterschiedlichen Attributen daraus Ableiten eines Endes der Fahrsituation und Bestimmen eines Übergangs zu einer neuen Fahrsituation in Abhängigkeit des Attributs dieses Punktes derart, dass für diesen Weg eine Folge von Fahrsituationen definiert wird,
- Identifizieren eines Satzes aufeinanderfolgender Punkte und Zuordnen eines gemeinsamen Fahrkontextes zu den Punkten dieses Satzes,
**dadurch gekennzeichnet, dass** wenigstens ein Teil der aufeinanderfolgenden Punkte unterschiedliche Angaben zum Fahrkontext aufweist und/oder bestimmte Punkte mehrere unterschiedliche Angaben zum Fahrkontext für ein und denselben Punkt aufweisen.

2. Verfahren nach Anspruch 1,
bei dem das Attribut eine der folgenden Angaben ist: eine Kreuzung, ein Verkehrskreisel, eine Kurve, eine Gerade, eine Kreuzung im Verkehrskreisel, eine Kreuzung in der Kurve, eine Kreuzung in der Geraden, ein Tunnel, eine Brücke.

3. Verfahren nach einem der vorhergehenden Ansprüche,
bei dem ein Fahrerassistenzsystem in Abhängigkeit der prädiktiv bestimmten Fahrsituation betätigt wird.

4. Verfahren nach dem vorhergehenden Anspruch,
bei dem das Fahrerassistenzsystem wenigstens einen der folgenden Vorgänge ausführt:
- Betätigen einer im Fahrzeug eingebauten Anlage zur Beleuchtung der Straße,
- Erkennen des Vorhandenseins von Fußgängern, Fahrzeugen oder Verkehrsschildern,
- Regeln der Fahrzeuggeschwindigkeit,
- Wechsel von einem Fahrzeugantrieb mit Verbrennungsmotor zu einem elektrischen Fahrzeugantrieb.

5. Verfahren nach dem vorhergehenden Anspruch,
bei dem die Vorgänge dadurch ausgeführt werden, dass ein Öffnungswinkel eines Radars in Abhängigkeit der Fahrsituation angepasst wird.

6. Verfahren nach einem der vorhergehenden Ansprüche,
bei dem für jeden Punkt anhand des Navigationssystems ein zusätzliches Attribut abgerufen (17) wird, das eine Angabe zum Fahrkontext beinhaltet, und die Bestimmung der Fahrsituation um die Fahrkontextangabe erweitert wird.

7. Verfahren nach dem vorhergehenden Anspruch,
bei dem die Fahrkontextangabe eine der folgenden Angaben ist: "Innerstädtisch", "Außerstädtisch", "Autobahn", "Sonstiges".

8. Verfahren nach dem vorhergehenden Anspruch,
bei dem alle Fahrkontexte hierarchisch gegliedert sind und als gemeinsamer Fahrkontext der hierarchisch oberste Fahrkontext aus den Fahrkontexten des Punktesatzes ausgewählt wird.

9. Verfahren nach einem der beiden vorhergehenden Ansprüche,
bei dem der Satz aufeinanderfolgender Punkte eine Aufeinanderfolge der Kontextangaben "Innerstädtisch" und "Autobahn" aufweist und der diesem Punktesatz zugeordnete gemeinsame Fahrkontext der Fahrkontext "Autobahn" ist.

10. Verfahren nach einem der vorhergehenden Ansprüche,
bei dem die Punkte, für die die Fahrsituationen bestimmt werden, den Punkten einer Strecke entsprechen, die in Abhängigkeit eines vom Nutzer angegebenen Zielorts vom Navigationssystem definiert ist, oder den Punkten einer Strecke entsprechen, die als die wahrscheinlichste definiert ist.

11. Verfahren nach einem der vorhergehenden Ansprüche,
bei dem ein Verlässlichkeitsindex berechnet wird, der der Bestimmung der Fahrsituation zugeordnet ist.

12. Verfahren nach dem vorhergehenden Anspruch in Verbindung mit einem der Ansprüche 3 bis 5,
bei dem das Fahrerassistenzsystem nur dann betätigt wird, wenn der Verlässlichkeitsindex über einem Schwellenwert liegt.

13. Verfahren nach einem der beiden vorhergehenden Ansprüche,
bei dem der Verlässlichkeitsindex von wenigstens einem der folgenden Parameter abhängt: Satellitenortungssystem, Genauigkeit der Kartendigitalisierung, Aktualisierungszeitpunkt des Kartenmaterials, Umgebung des Fahrzeugs, Zielführungsmodus gewählt oder nicht.

14. System zur prädiktiven Bestimmung von Fahrsituationen eines Fahrzeugs,
**dadurch gekennzeichnet, dass** es eine eingebaute Navigationsvorrichtung (123) und Verarbeitungsmittel (124) umfasst, die dazu ausgebildet sind, das Verfahren nach einem der vorhergehenden Ansprüche durchzuführen.

## Claims

1. Method for determining road situations of a vehicle predictively, comprising the step of obtaining (11) from a navigation system points which define at least one possible route situated in front of the vehicle, additionally comprising the following steps:
- for each point there is extraction (13) from the navigation system of at least one attribute describing the road environment associated with this point;
- the attribute of this point is compared (14) with that of the preceding point;
- if the attributes are identical, a driving situation is deduced from this, such that the said driving situation depends on the attribute of the preceding point;
- if the two attributes are different, an end of driving situation is deduced from this, and a transition to a new driving situation is determined according to the attribute of this point, such as to define a succession of driving situations for this route;
- a series of successive points is identified, and a common road context is associated with the points of this series;
**characterised in that** at least some of the said successive points have data items from different road contexts, and/or certain points have a plurality of different road context data items for a single point.

2. Method according to claim 1, wherein the attribute is one of the following data items:
a crossing, a roundabout, a bend, a straight line, a crossing at a roundabout, a crossing at a bend, a crossing on a straight line, a tunnel or a bridge.

3. Method according to either of the preceding claims, wherein a driver assistance system is controlled according to the driving situation determined predictively.

4. Method according to the preceding claim, wherein the driver assistance system carries out at least one of the following operations:
- activation of a system incorporated in the vehicle for lighting of the road;
- detection of the presence of pedestrians, vehicles or road signs;
- speed regulation of the vehicle;
- transition from a thermal propulsion mode of the vehicle to an electric propulsion mode of the vehicle.

5. Method according to the preceding claim, wherein the operations are carried out by adapting an angle of opening of a radar according to the driving situation.

6. Method according to any one of the preceding claims, wherein, for each point, there is extraction (17) from the navigation system of an additional attribute relating to a road context data item, and the determination of the driving situation is enriched (15) with the road context data item.

7. Method according to the preceding claim, wherein the road context data item is one from amongst the following data items: "town", "out of town", "motorway", "other".

8. Method according to the preceding claim, wherein all the road contexts are graded hierarchically and the common road context selected is the hierarchically highest road context from amongst the road contexts of this series of points.

9. Method according to either one of the two preceding claims, wherein the series of successive points has alternation of the "town" and "motorway" data items, and the common road context associated with this series of points is the "motorway" road context.

10. Method according to any one of the preceding claims, wherein the points for which the driving situations are determined correspond to the points of an itinerary defined by the navigation system according to a destination indicated by the user, or they correspond to the points of an itinerary defined as the most probable.

11. Method according to any one of the preceding claims, wherein an index of confidence is calculated, associated with the determination of the driving situation.

12. Method according to the preceding claim, taken in its combination with any one of claims 3 to 5, wherein the driver assistance system is controlled only if the index of confidence is higher than a threshold.

13. Method according to any one of the two preceding claims, wherein the index of confidence depends on at least one from amongst the following parameters: satellite positioning system, precision of the mapping scanning, date of updating of the mapping, environment of the vehicle, guiding mode selected or not selected.

14. System for predictive determination of the driving situations of a vehicle, **characterised in that** it comprises an on-board navigation device (123) and processing means (124) which are designed to implement the method according to any one of the preceding claims.
